Europäisches Patentamt

**European Patent Office**

**Office européen des brevets**

(19)

(11) Publication number: **0 011 911**
**A1**

(12) # EUROPEAN PATENT APPLICATION

(21) Application number: **79301723.7**

(22) Date of filing: **22.08.79**

(51) Int. Cl.³: **F 21 K 2/06**
**C 09 K 11/07, B 32 B 15/08**
**B 65 D 81/24**

(30) Priority: **24.11.78 US 963543**

(43) Date of publication of application:
**11.06.80 Bulletin 80/12**

(84) Designated Contracting States:
**BE DE FR GB IT NL SE**

(71) Applicant: **AMERICAN CYANAMID COMPANY**
**Berdan Avenue**
**Wayne New Jersey 06904(US)**

(72) Inventor: **Rauhut, Michael McKay**
**1266 Sherlin Drive**
**Bridgewater New Jersey(US)**

(74) Representative: **Allam, Peter Clerk et al,**
**TREGEAR, THIEMANN & BLEACH Enterprise House**
**Isambard Brunel Road**
**Portsmouth, Hants PO1 2AN(GB)**

(54) **A method for protecting the liquid components of a chemiluminescent system and a chemiluminescent light-generating system thus protected.**

(57) In a chemiluminescent lighting system having separated components in storage before use, at least one of the separate components is stored in a container made from a laminate of polypropylene film and aluminium foil. Good stability of both oxalate ester components and hydroperoxide components when stored in such containers is demonstrated.

EP 0 011 911 A1

Croydon Printing Company Ltd.

TITLE:  STORAGE OF COMPONENTS OF CHEMILUMINESCENT
LIGHTING SYSTEMS

Field of the Invention

This invention relates to chemiluminescent compositions and to a method and packaging material for improving the storage stability of chemiluminescent components.

Background of the Invention

Chemiluminescence is obtained when certain chemiluminescent compounds, for instance oxalic-type compounds, such as oxalic acid esters, are contacted in the presence of a fluorescer with a hydrogen peroxide compound. Such a system is described in U.S. Patent 3,597,362, the disclosure of which is incorporated herein by reference. Packaged chemiluminescent light devices which utilize these chemiluminescent systems are described in U.S. Patents 3,511,612 and 3,576,987. A typical chemiluminescent device comprises a lightstick, i.e. a transparent or translucent flexible plastic outer tube of polyethylene or the like and within the outer tube a frangible glass inner tube. The inner tube is filled with one component of a two-component system (usually the hydroperoxide component) and the outer plastic tube is filled with the other component (oxalate plus fluorescer). To operate the device, the outer flexible tube is bent, thereby breaking the glass tube to mix the two components within the transparent outer tube. Reaction of the mixture produces chemiluminescence and the tube transmits the lights.

In order for a chemiluminescent system to be practical it must be capable of storage for reasonable storage periods at temperatures above normal room temperature, for example, up to about 40°C, and in humid atmosphere, without undue deterioration, which would cause loss of light generating capacity when the system is activated for use.

In the systems described, the chemiluminescent component, for example, the oxalic acid ester, is subject to deterioration by light, heat, and humidity. Polyethylene has been the packaging material of choice for containing the oxalate component because of its low cost, ease of fabrication, and translucence. However, the polyethylene tube must be protected from moisture and light by enclosing it in an aluminum foil envelope during storage, since polyethylene is not impervious to moisture. Since the hydroperoxide component would be sensitive to storage in polyethylene, deteriorating rapidly on storage therein even at ordinary room temperature, it is preferred to contain the hydroperoxide component in the sealed inner glass vial which floats in the fluid contents of the polyethylene outer tube.

Aluminum foil is a satisfactory wrapper for containing the polyethylene tube in storage, provided the wrapper does not develop any leakage by ruptures, pin holes or the like. There is some difficulty in sealing an aluminum foil wrapper to make it totally impervious to moisture.

Rauhut, in U.S. Patent 3,974,368, disclosed a chlorosilane passivization treatment for glass or plastic container materials, the object of which is to make the material more suitable for storage of the oxalic acid ester component. While this treatment was shown to be effective, it is costly and time consuming. Therefore, there is a need for a mterial in which the chemiluminescent components are protected from deterioration during storage.

Summary of the Invention

The present invention employs packaging material for containing one or several of the liquid components in a chemiluminescent device. This material is a laminate of aluminum foil and polypropylene film, bonded together preferably by means of a low molecular weight polypropylene adhesive.

## Description of the Invention

Diaryl and dialkyl oxalates, substituted with strong electronegative groups, may be used as the chemiluminescent component, as described in U.S. Patent 3,597,362. In general, the greatest light output is expected with the oxalates derived from phenols or alcohols having a pKa value lower than 7.0. Examples include:

bis(4-nitrophenyl)oxalate

bis(6-carbopentoxy-2,3,5-trichlorophenyl)oxalate

bis(2,4-dinitrophenyl)oxalate, and the like.

The same fluorescers disclosed for use with oxalate-hydroperoxide systems in U.S. Patents 3,597,362 and 3,557,233 are useful in the present invention. Examples include:

9,10-diphenylanthracene (blue emission)

9,10-bis(phenylethynyl)anthracene (yellow-green)

1-chloro-9,10-bis(phenylethynyl)anthracene(yellow-green

2-chloro-9,10-bis(phenylethynyl)anthracene (yellow)

1,5-dichloro-9,10-bis(phenylethynyl)anthracene (yellow)

1,8-dichloro-9,10-bis(phenylethynyl)anthracene (yellow)

5,12-bis(phenylethynyl)naphthacene (red) rubrene (orange), and the like.

Suitable organic solvents (for example, dibutyl phthalate) and rate-regulating catalysts are described in U.S. Patent 3,576,987.

Each of the several liquid components of a chemiluminescent system of the kind described can be effectively stored in a container of the laminate material of the invention. The laminate is an aluminum foil bonded to a cast polypropylene film. Suitably the polypropylene film has a thickness of about 0.5 to 4 mils, and contains a food grade antioxidant additive. The bonding adhesive for the laminate preferably is a low molecular weight polypropylene. A suitable laminate is available from American Can Co. under the Trade name Maraflex 7F. At least one of the chemiluminescent components is stored in a container made of the laminate with the contents in contact with the polypropylene surface of the laminate material.

The laminate is not suitable for use as a material for the outer container of a lighting device, because it cannot transmit chemiluminescence. The laminate is nonetheless useful as a storage container for one or several of the liquid chemiluminescent components in a chemiluminescent device to protect the contents from light, air and moisture. A package made of the laminate material can be used in lighting devices of diverse shapes and designs, provided that the construction of the lighting device comprises means to rupture the laminate package and allow the contents thereof to mix and react to produce chemiluminescence within a translucent outer container. Devices of this kind were described for example in U.S. Patent 3,539,794 patented November 10, 1970.

It has been discovered, quite unexpectedly, that the hydroperoxide component, which is not stable in polyethylene, will be quite stable when stored in a container made of the laminate material of the invention, with the polypropylene layer inside the container contacting the hydroperoxide.

The following examples illustrate the invention.

Preparation of Samples

Pouches were prepared using Maraflex 7F laminate (American Can Co.) Several of the pouches were charged with 0.15 molar bis(6-carbopentoxy-2,3,5-trichlorophenyl) oxalate and 0.009 molar 1-chloro-9,10-bis(phenylethynyl) anthracene in dibutyl phthalate solvent, and the pouches were sealed. Similarly, several pouches were charged with 1.50 mol aqueous 90% hydrogen peroxide solution and 2.0 x $10^{-3}$ molar sodium salicylate in a solvent consisting of 80% by volume of dimethyl phthalate and 20% by volume of t-butyl alcohol and sealed. The sealed pouches with the contents described were stored at room temperature and at 40°C for 1, 3 and 6 months before testing. Control samples were prepared similarly and tested immediately.

Testing Procedure

Measured amounts of the oxalate component and activator component prepared as described, were tested when freshly made and after storage for measured periods in the pouches described. The components were mixed and light intensity values were measured every two minutes in a monochromatorphotomultiplier light measuring instrument. The measurements were transmitted to computer programmed to calculate the time-intensity and other values shown in the Tables. The computer program yields time-intensity readings for each sample, in both lumens/liter and in einsteins/sec/ml, along with light capacity, T0.75 and Quantum yield. Calibration for absolute light intensities were carried out using the spectroradiometerluminometer developed by B.G. Roberts and R.C. Hirt, Applied Spectroscopy 21,250 (1967).

Results

Results of the testing procedure for samples 1-12 are given in Table I.

TABLE I

Storage Stability of Oxalate - $H_2O_2$ Chemiluminescent System in Aluminum-Polypropylene Laminate

| Sample No. | Months Stored | Storage Temp., °C | Light Capacity[a] | TO.75[b] | Quantum Yield x $10^2$ [c] |
|---|---|---|---|---|---|
| 1 | None | -- | 983 | 24 | 19.7 |
| 2 | None | -- | 936 | 25 | 18.8 |
| 3 | None | -- | 876 | 26 | 17.6 |
| 4 | None | -- | 895 | 25 | 18.0 |
| 5 | 1 | R.T. | 874 | 27 | 17.6 |
| 6 | 1 | R.T. | 904 | 28 | 18.2 |
| 7 | 1 | 40 | 1015 | 33 | 20.4 |
| 8 | 1 | 40 | 886 | 29 | 17.8 |
| 9 | 3 | R.T. | 1055 | 23 | 21.2 |
| 10 | 3 | R.T. | 910 | 37 | 18.3 |
| 11 | 3 | 40 | 910 | 37 | 18.3 |
| 12 | 3 | 40 | 949 | 33 | 19.0 |

TABLE I (continued)

Storage Stability of Oxalate - $H_2O_2$ Chemiluminescent System in Aluminum-Polypropylene Laminate

| Sample No. | Months Stored | Storage Temp., °C | Light Capacity[a] | TO.75[b] | Quantum Yield x $10^2$ [c] |
|---|---|---|---|---|---|
| 13 | 6 | R.T. | 768 | 126 | 15.4 |
| 14 | 6 | 40 | 598 | 103 | 12.0 |

(a) Light capacity is the integrated light output in lumen-hours/liter of emitting solution.

(b) TO.75 is the time required (minutes) for emission of 75% of the total light.

(c) Quantum yield defines the efficiency of the chemiluminescent reaction in einsteins/mole of limiting reagent (oxalate ester); 100% efficiency, QY = 1.00.

- 8 -

The results in Table I demonstrate that neither the performance of the oxalate ester components nor that of the hydrogen peroxide component, with regard to light production, has been essentially changed when those components have been separately stored in sealed containers made with the laminate of this invention for periods up to three months at temperatures at least as high as 40°C. The loss in storage for six months is remarkably small under the circumstances.

0011911

CLAIMS:

1. A method for protecting the liquid components of an oxalic acid ester-hydroperoxide chemiluminescent system from deterioration and subsequent loss of light capacity on storage in the presence of elevated temperature and humidity which comprises storing the respective oxalate ester and hydroperoxide components in separate containers with at least one of the respective oxalate ester and hydroperoxide components of said system sealed in a container constructed of a laminate material having an aluminum foil layer bonded to a cast polypropylene film layer, said component being in contact with the cast polypropylene layer inside said container.

2. A method according to Claim 1, wherein said laiminate is bonded by means of a low molecular weight polypropylene adhesive.

3. An oxalic acid ester - hydroperoxide chemiluminescent light-generating system characterized in that the oxalate ester and hydroperoxide components are stored prior to mixing in separate containers, at least one of said components being sealed in a container constructed of a laminate material having an aluminum foil layer bonded to a cast polypropylene film layer, the component being in contact with the cast polypropylene layer inside said container.

4. A system according to Claim 3, wherein said laminate is bonded by means of a low molecular weight polypropylene adhesive.

IREGEAR, THIEMANN & BLEACH,
CHARTERED PATENT AGENTS,
ENTERPRISE HOUSE,
ISAMBARD BRUNEL ROAD,
PORTSMOUTH PO1 2AN
AND
19/51, BEDFORD ROW, LONDON WC1V 6RI

European Patent Office

**EUROPEAN SEARCH REPORT**

0011911

Application number

EP 79 30 1723

## DOCUMENTS CONSIDERED TO BE RELEVANT

| Category | Citation of document with indication, where appropriate, of relevant passages | Relevant to claim |
|---|---|---|
| | US - A - 3 584 211 (AMERICAN CYANAMID COMPANY)<br>  * Claim 1; column 2, lines 42-73; column 6, lines 29-38; figure 1 *<br><br>-- | 1,3 |
| | US - A - 3 808 414 (B.G. ROBERTS)<br>  * Claims 1,2,4; column 7, lines 26-54; figure 1 *<br><br>-- | 1,3 |
| | FR - A - 2 386 402 (COMPAGNIE FRANCAISE DE RAFFINAGE)<br>  * Claims 1,13,14,15,16; page 4, lines 31-33, line 38 - page 5, line 2; page 5, lines 11-15 *<br><br>-- | 1,2 |
| A | US - A - 3 819 925 (H.P. RICHTER & R.E. TEDRICK)<br>  * Claim 1; column 1, lines 34-42; column 3, lines 14-15; column 4, lines 41-55 *<br><br>-- | 1,3 |
| A | US - A - 4 104 708 (W.H. BOHLI)<br>  * Column 2, line 1 - column 4, line 33; figure *<br><br>---- | 1 |

**CLASSIFICATION OF THE APPLICATION (Int. Cl. 3)**

F 21 K 2/06
C 09 K 11/07
B 32 B 15/08
B 65 D 81/24

**TECHNICAL FIELDS SEARCHED (Int.Cl. 3)**

F 21 K 2/06
C 09 K 11/07
B 32 B

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 29-02-1980 | DECANNIERE |

EPO Form 1503.1 06.78